Europäisches Patentamt

European Patent Office (11) Veröffentlichungsnummer: **0 270 816**
**B1**
Office européen des brevets

(19)

(12) **EUROPÄISCHE PATENTSCHRIFT**

(45) Veröffentlichungstag der Patentschrift: (51) Int. Cl.⁵: **B29C 47/12**
**20.06.90**

(21) Anmeldenummer: **87115872.1**

(22) Anmeldetag: **29.10.87**

(54) Extrusionskopf.

(30) Priorität: **27.11.86 DE 3640527**

(43) Veröffentlichungstag der Anmeldung:
**15.06.88 Patentblatt 88/24**

(45) Bekanntmachung des Hinweises auf die Patenterteilung:
**20.06.90 Patentblatt 90/25**

(84) Benannte Vertragsstaaten:
**ES FR GB IT**

(56) Entgegenhaltungen:
**DE-A- 2 622 011**
**DE-B- 2 236 363**
**GB-A- 2 166 684**

(73) Patentinhaber: **Fried. Krupp Gesellschaft mit beschränkter Haftung, Altendorfer Strasse 103, D-4300 Essen 1(DE)**

(72) Erfinder: **Hirschkorn, Ingo, Hauptstrasse 63, D-2153 Neu Wulmstorf(DE)**

**Beschreibung**

Die Erfindung betrifft einen Extrusionskopf nach dem Oberbegriff des Anspruchs 1 (DE-A 1 729 618).

Bei bekannten Extrusionsköpfen werden die einzelnen Kopfteile durch seitlich angeordnete Zugrahmen zu einer betriebsfähigen Einheit zusammengepreßt. Dabei werden die Zugrahmen durch Hydraulikzylinder kraftbeaufschlagt, die sich gegen das feststehende Kopfmittelteil abstützen. Die Zugrahmen weisen entweder zwei konische Spannflächen (vgl. z.B. DE-A 3 430 062) oder hakenförmige Klammern (vgl. DE-A 1 729 618) auf, die an sog. Knaggen angreifen, die seitlich an den beweglichen Kopfteilen angeordnet sind. In jedem Fall müssen die Zugrahmen seitlich ausgeschwenkt werden, wenn die beweglichen Kopfteile zum Öffnen der Zuführkanäle angehoben bzw. abgesenkt werden sollen. Das seitliche Ausschwenken der ohnehin sehr breiten Zugrahmen erfordert aber einen erheblichen Platzbedarf. Außerdem müssen die Hydraulikzylinder - soweit sie mit dem Schwenkrahmen mit ausschwenken (vgl. DE-A 1 729 618) über flexible Leitungen mit einer Druckquelle verbunden werden, was bei den üblichen hohen Drücken von etwa 500 bar erhebliche Werkstoffprobleme verursacht.

Daneben ist aus der DE-A 2 457 532 ein Einfach-Extrusionskopf mit zwei beweglichen Kopfhälften bekannt, deren gemeinsame Trennfuge durch die Achse des Extruders geht und die gegen die Stirnseite des Extruders jeweils eine weitere Trennfuge oder Druckflächenpaarung bilden. Bei diesem bekannten Extruder ist mittig oben und unten am Zylinder des Schneckenextruders je ein Hydraulikzylinder angelenkt, der mit seiner Kolbenstange jeweils an einem Doppelhebel zum Freigeben und Verspannen der Kassette und der Profilleiste und zum Öffnen, Schließen und Verspannen der Kopfteile dient. Abgesehen davon, daß dieses Schließsystem auf einen Extrusionskopf mit zwei beweglichen Kopfteilen beschränkt ist, müssen zum Öffnen und Schließen der Kopfteile auch dieses Extrusionskopfes Klammern seitlich verschwenkt werden.

Der Erfindung liegt die Aufgabe zugrunde, einen Einfach- oder Mehrfachextrusionskopf zu schaffen, der ohne seitlich ausschwenkende Spann- oder Klemmteile auskommt. Außerdem soll das Verspannen der einzelnen Extrusionskopfteile unabhängig vom Verspannen oder Klemmen der Profilleiste und der Kassette erfolgen können.

Diese Aufgabe wird durch die im Anspruch 1 gekennzeichneten Merkmale gelöst. Dadurch, daß jedem ggf. äußeren schwenkbaren Kopfteil, d.h. jedem schwenkbaren Kopfoberteil und/oder Kopfunterteil, ein eigenes Paar Hydraulikzylinder zugeordnet ist, wird durch den Wegfall des Spannrahmens und der mit diesem verbundenen beweglichen Teile nicht nur eine erhebliche Materialeinsparung erreicht. Bei einem Extrusionskopf mit mindestens zwei Extrudern ist es darüber hinaus möglich, die Kopfteile unabhängig voneinander zu öffnen bzw. zu verspannen und dadurch einen oder mehrere Zuführkanäle unabhängig von dem bzw. den anderen zu reinigen.

Zwar ist im Zusammenhang mit einer zweiteiligen Spritzgießform mit zwei bewegbaren Formhälften aus der GB-A 2 166 684 eine Spannvorrichtung bekannt, bei der der Formträger der einen Formhälfte ein nicht drehbares Kupplungsteil mit einer "Schlüsselöffnung" und der Formträger der anderen Formhälfte einen Spannzylinder mit einer drehbaren Schubstange mit der Schüsselöffnung entsprechenden Kupplungsnocken aufweist, wobei die Formhälften nach jedem Spritzgießvorgang zur Entnahme des Spritzgießwerkstücks entriegelt und auseinandergefahren werden. Nach der Entnahme des Spritzgießwerkstücks werden die Formhälften zum Herstellen des nächsten Werkstücks wieder zusammengefahren und verriegelt bzw. verspannt. Dabei erfolgt aber die Bewegung der Formhälften geradlinig zueinander. Die Bewegungseinrichtung fährt die Formhälften bis auf einen Rest zusammen und schiebt am Ende der Bewegung das nicht drehbare Kupplungsteil mit seiner Schlüsselöffnung auf das Kupplungsteil mit den drehbaren Kupplungsnocken, wobei die Kupplungsnocken erst im Verlauf der weiteren geradlinigen Bewegung durch eine feststehende Kulisse gedreht und die Kupplung so zum Spannen vorbereitet wird.

Die bei der Spannvorrichtung gemäß der GB-A 2 166 684 vorausgesetzte geradlinige Bewegung der Werkzeugteile ist aber bei einem gattungsgemäßen Extrusionskopf, bei dem die bewegbaren Kopfteile um eine Achse schwenkbar gelagert sind, nicht gegeben, so daß eine Übertragung der aus der GB-A 2 166 684 bekannten Spannvorrichtung nicht naheliegt.

Vorteilhafte Weiterbildungen der Erfindung sind in den Unteransprüchen beschrieben. So ergibt sich aus dem Anspruch 2 eine einfache lösbare Verbindung zwischen der Kolbenstange eines Hydraulikzylinders und dem zugehörigen Kopfteil, wobei die Kolbenstange außer der linearen Bewegung lediglich eine im wesentlichen kraftlose Drehung um einen halben, durch die Anzahl der Vorsprünge gegebenen Teilungswinkel erfährt. Dabei kann die Drehung schrittweise fortschreitend oder alternierend erfolgen.

Die Ausbildung der Durchlässe und Anlageflächen der beweglichen Kopfteile nach Anspruch 3 ist - in festigkeitsmäßiger Hinsicht - besonders günstig, während die Ausbildung nach Anspruch 4 besonders einfach ist und sich bevorzugt für kleinere Einheiten eignet.

Das nach Anspruch 5 ausgebildete Drehwerk erlaubt eine Drehbewegung bei verhältnismäßig geringer Längsbewegung. Bei einem nach Anspruch 6 ausgebildeten Drehwerk ist überhaupt keine Längsbewegung erforderlich, so daß die für die hammerförmigen Kopfenden der Kolbenstangen vorgesehenen Ausnehmungen in den schwenkbaren Kopfteilen mit verhältnismäßig geringer Tiefe ausgebildet sein können.

Ausführungsbeispiele des Gegenstandes der Erfindung sind in der Zeichnung dargestellt und werden im folgenden näher erläutert. Es zeigen:

Fig. 1 einen Einfachextrusionskopf mit beweglichem Kopfoberteil und fest angeordnetem Kopfunterteil in einer Seitenansicht,

Fig. 2 einen Blick auf die Öffnung des Kopfoberteils für die Kolbenstange des Hydraulikzylinders in einer auszugsweisen schrägen Ansicht entsprechend dem Pfeil A in Fig. 1,

Fig. 3 den Extrusionskopf nach Fig. 1 mit zurückgefahrener Kolbenstange in einer auszugsweisen Seitenansicht,

Fig. 4 einen Dreifachextrusionskopf mit zwei beweglichen äußeren Kopfteilen und zwei entsprechenden Zwischenteilen in geschlossenem Zustand in einer Seitenansicht,

Fig. 5 die Vorrichtung nach Fig. 4 mit geöffnetem Kopfober- und Zwischenteil in der Seitenansicht,

Fig. 6 ein bewegliches Kopfteil mit zwei seitlichen Vorsprüngen und das hammerkopfförmige Ende einer Kolbenstange in einer auszugsweisen perspektivischen Darstellung,

Fig. 7 das Kopfteil nach dem Verspannen durch die Kolbenstange in auszugsweiser perspektivischer Darstellung,

Fig. 8 ein mit einem Spannzylinder verbundenes Drehwerk im Längsschnitt und

Fig. 9 die Außenfläche der Kurvenhülse und eine feststehende Kurvenrolle des Drehwerks nach Fig. 8 in einer auszugsweisen vergrößerten Abwicklung.

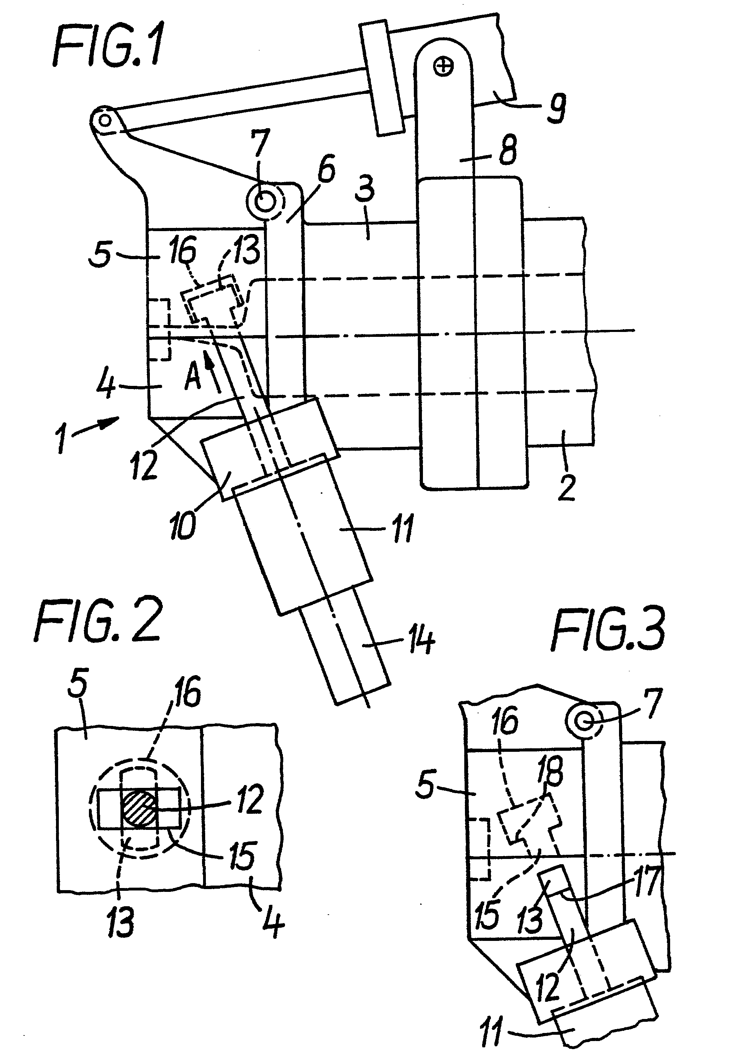

Der Extrusionskopf 1 nach den Figuren 1 bis 3, bei dem der Einfachheit halber keine Klemmkeile zum Verspannen der Profilleiste und der Kassette dargestellt sind, weist ein an dem Extruder 2 befestigtes Maschinenkopfteil 3, ein fest mit diesem verbundendes unteres Kopfteil 4 und ein oberes Kopfteil 5 auf, das gelenkig um eine an einem Flansch 6 des Maschinenkopfteils 3 angeordnete Achse 7 schwenkbar gelagert ist und mit Hilfe eines in einem Ansatz 8 des Maschinenkopfteils 3 gelagerten Hydraulikzylinders 9 nach oben ausschwenkbar ist.

Am unteren Ende des Maschinenkopfteils 3 ist seitlich je eine Konsole 10 mit einem Hydraulikspannzylinder 11 angeordnet, dessen Kolbenstange 12 in Richtung auf das bewegliche Kopfoberteil 5 ausfahrbar ist und an ihrem Ende mit einem hammerförmigen Kopf 13 ausgebildet ist. Der Hydraulikzylinder 11 ist mit einem Drehwerk 14 versehen, das die Kolbenstange 12 jeweils um 90° drehen kann, wobei die einzelnen Drehungen schrittweise oder alternierend erfolgen können.

Die seitlich gegenüber dem Kopfunterteil 4 vorstehenden Enden des Spritzkopfoberteils 5 weisen eine sich in Querrichtung erstreckende rechteckige Öffnung 15, deren lichte Abmessungen geringfügig größer sind als die Außenabmessungen des hammerförmigen Kopfes 13 der Kolbenstange 12, und die in eine hinterschnittene zylindrische Ausnehmung 16 übergeht.

Beim Schließen des Extrusionskopfes 1 wird das bewegliche Kopfoberteil 5 zunächst mit dem Hydraulikzylinder 9 nach unten zur Anlage an das feststehende Kopfunterteil 4 gefahren. Dann wird die Kolbenstange 12 aus der in Fig. 3 dargestellten Lage durch die hierfür im Kopfoberteil 5 vorgesehene Öffnung 15 in die Ausnehmung bzw. den Hohlraum 16 gefahren und durch das Drehwerk 14 um 90° gedreht, so daß sich die Druck- oder Anlagefläche 17 des hammerförmigen Kopfes 13 den entsprechenden Druck- oder Anlageflächen 18 des Hohlraums 16 gegenüberstehen. Dann wird der Hydraulikzylinder 11 in dem Sinne beaufschlagt, daß die Anlageflächen 17 des Hammerkopfes 13 auf die Anlageflächen 18 der Ausnehmung 16 drücken und damit das Kopfoberteil 5 gegen das Kopfunterteil 4 und das Maschinenkopfteil 3 gepreßt wird (vgl. Fig. 1).

Zum Lösen des Kopfoberteils 5 wird der Hydraulikzylinder 11 zunächst wieder entspannt, die Kolbenstange 12 durch das Drehwerk 14 um 90° gedreht und die Kolbenstange 12 aus der Öffnung 15 in die in Fig. 3 dargestellte Lage zurückgezogen.

In Abwandlung des beschriebenen Ausführungsbeispiels kann der Kopf 13 der Kolbenstange 12 auch sternförmig mit (nicht dargestellt) z.B. drei radial angeordneten und gleichmäßig am Umfang verteilten Vorsprüngen gestaltet sein, wobei die Öffnung 15 entsprechend ausgebildet ist und der Drehwinkel des Drehwerks 14 entsprechend nur 60° beträgt.

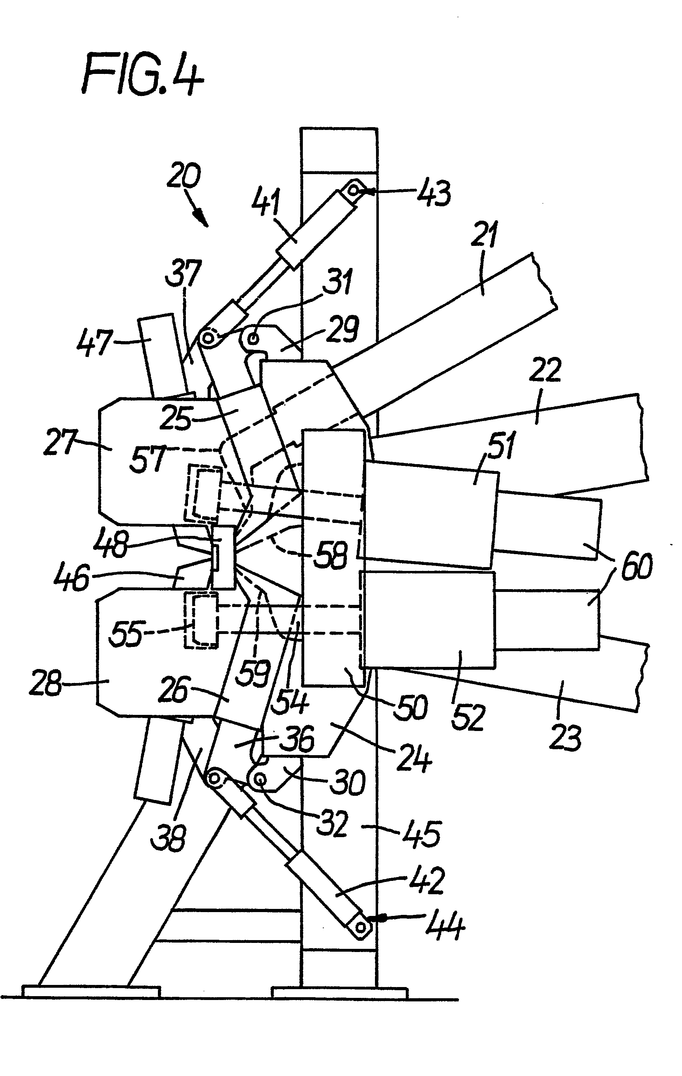

In Fig. 4 ist ein Dreifachextrusionskopf 20 mit drei Extrudern 21, 22, 23 dargestellt, wobei es ohne weiteres möglich ist, einen (nicht dargestellten) vierten Extruder unter den dritten Extruder 23 anzuordnen. Dieser Extrusionskopf 20 weist ein feststehendes Mittelteil 24, je ein oberes und ein unteres bewegliches Zwischenteil 25, 26 und je ein bewegliches äußeres Ober- und Unterteil 27, 28 auf.

Das Mittelteil 24 weist je eine obere und untere Halteranordnung 29, 30 mit je einer feststehenden Lagerachse 31, 32 auf. Die Zwischenteile 25, 26, das Oberteil 27 und das Unterteil 28 sind jeweils über fest mit ihnen verbundene Arme 35, 36 und 37, 38 an der oberen bzw. unteren Achse 31, 32 schwenkbar gelagert. Zum Aus- und Zurückschwenken der beweglichen Kopfteile 25...28 ist oben und unten je ein Hydraulikzylinder 41, 42 vorgesehen, der bei 43 bzw. 44 an einem feststehenden Gestell oder Rahmenteil 45 angelenkt ist (in Fig. 4 ist der Hydraulikzylinder 41 für das obere Zwischenteil 25 und der Hydraulikzylinder 42 für das Unterteil 4 der Übersichtlichkeit halber weggelassen, wobei die Hydraulikzylinder 41, 42 für die äußeren Kopfteile 27, 28 und die Zwischenteile 25, 26 jeweils senkrecht zur Zeichenebene versetzt angeordnet zu denken sind).

Das Ober- und Unterteil 27, 28 weisen jeweils einen in ihnen geführten Klemmkeil 46 auf. Die Klemmkeile 46 werden in bekannter Weise durch Hydraulikzylinder 47 zum Spannen bzw. Lösen einer Kassette 48 mit einer Profilleiste von den Hydraulikzylindern 47 bewegt. An der Außenseite des Mittelteils 24 sind Konsolen 50 befestigt, in denen sich jeweils zwei Hydraulikzylinder 51, 52 abstützen, deren Kolbenstangen 53, 54 wiederum ein hammerförmiges Ende bzw. einen hammerförmigen Kopf 55 aufweisen und in Richtung auf das Oberbzw. Unterteil 27, 28 ausfahrbar sind. Das Oberteil und das Unterteil 27 bzw. 28, die jeweils breiter als die Zwischenteile 25, 26 ausgeführt sind, weisen eine Öffnung 56 auf, wie sie bereits im Zusammenhang mit dem Ausführungsbeispiel gemäß den Figuren 1 bis 3 (dortiges Bezugszeichen 15) beschrieben ist.

Mit dem Verspannen des Ober- und des Unterteils 27, 28 werden gleichzeitig die Zwischenteile 25, 26 fest gegen das Mittelteil 24 verspannt, so daß der gesamte Extrusionskopf 1 eine betriebsfähige Einheit bildet.

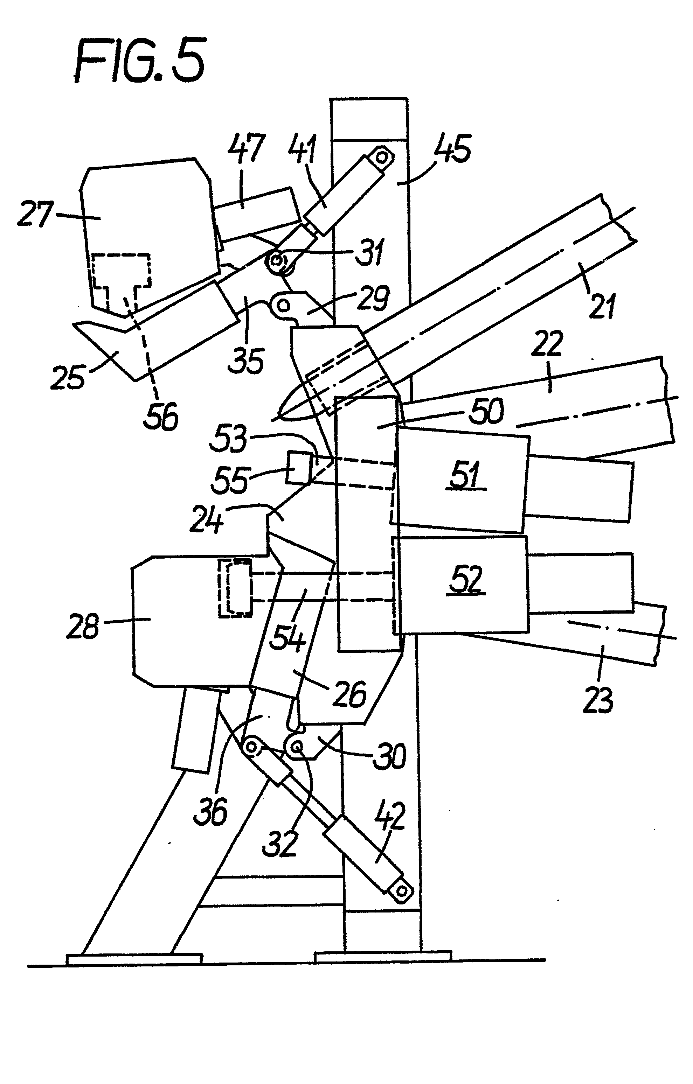

In Fig. 5 ist das Oberteil in geöffnetem und das Unterteil in geschlossenem Zustand dargestellt. In diesem Zustand des Extrusionskopfes 20 können die den Extrudern 21, 22 zugeordneten (in Fig. 4 gestrichelt angedeuteten) Zuführkanäle 57, 58 unabhängig von dem dem Extruder 23 zugeordneten Zuführkanal 59 gesäubert werden.

Die Hydraulikzylinder 51, 52 weisen - wie der Hydraulikzylinder gemäß Fig. 1 - ein Drehwerk 60 auf.

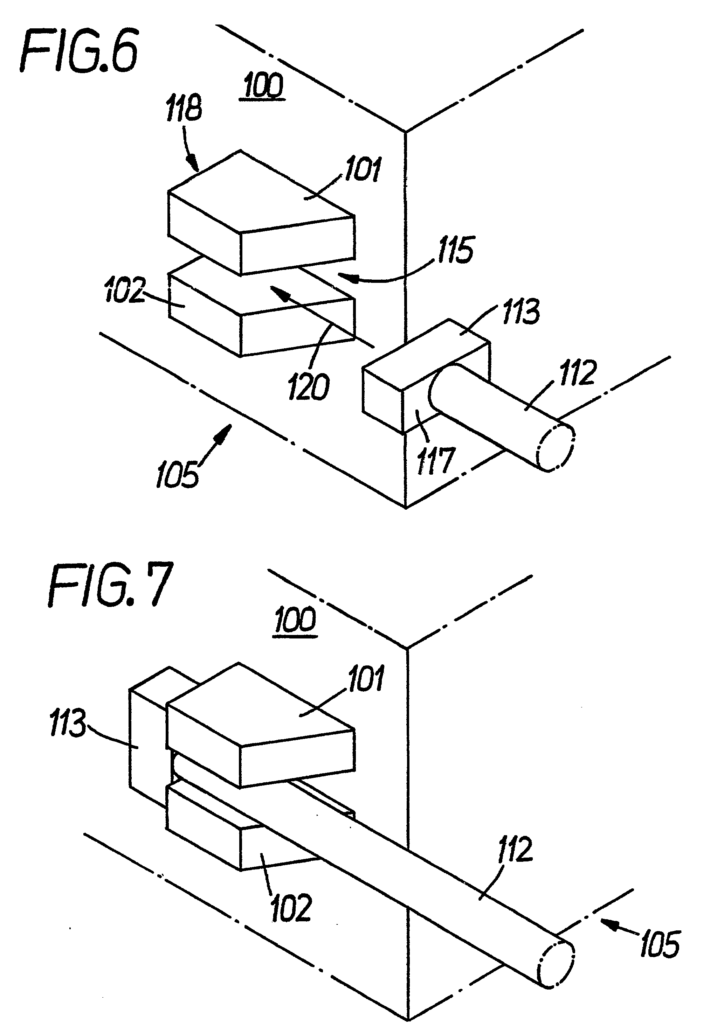

In den Figuren 6 und 7 ist ein bewegliches Extrusionskopfteil 105 mit gegenüber dem Ausführungsbeispiel nach den Figuren 1 bis 3 reduzierter Breite dargestellt. An seinen Seitenflächen 100 ist das Kopfteil 105 jeweils mit parallel zur Achse der Kolbenstange 112 verlaufenden seitlichen Vorsprüngen 101, 102 versehen, zwischen denen eine Ausnehmung bzw. ein Zwischenraum 115 ist, dessen lichtes Maß geringfügig größer ist als die Außenabmessungen des hammerförmigen Kopfes 113 der Kolbenstange 112. An der von der Kolbenstange 112 abgewandten Seite weisen die Vorsprünge 101, 102 je eine Anlagefläche 118 auf. Zum Spannen des Kopfteils 105 fährt die Kolbenstange 112 mit parallel zu der Ausnehmung 115 ausgerichtetem Kopf 113 in Richtung des Pfeiles 120 bis hinter die Vorsprünge 101, 102. Danach wird die Kolbenstange 112 einmal um 90° gedreht und entgegen dem Pfeil 120 angezogen, so daß sich die Anlageflächen 117 des hammerförmigen Kopfes 113 an die Anlageflächen 118 der Vorsprünge 101, 102 anlegen und das Kopfteil 105 entgegen dem Pfeil 120 gegen ein anderes (hier nicht weiter dargestelltes) Kopfteil anpressen.

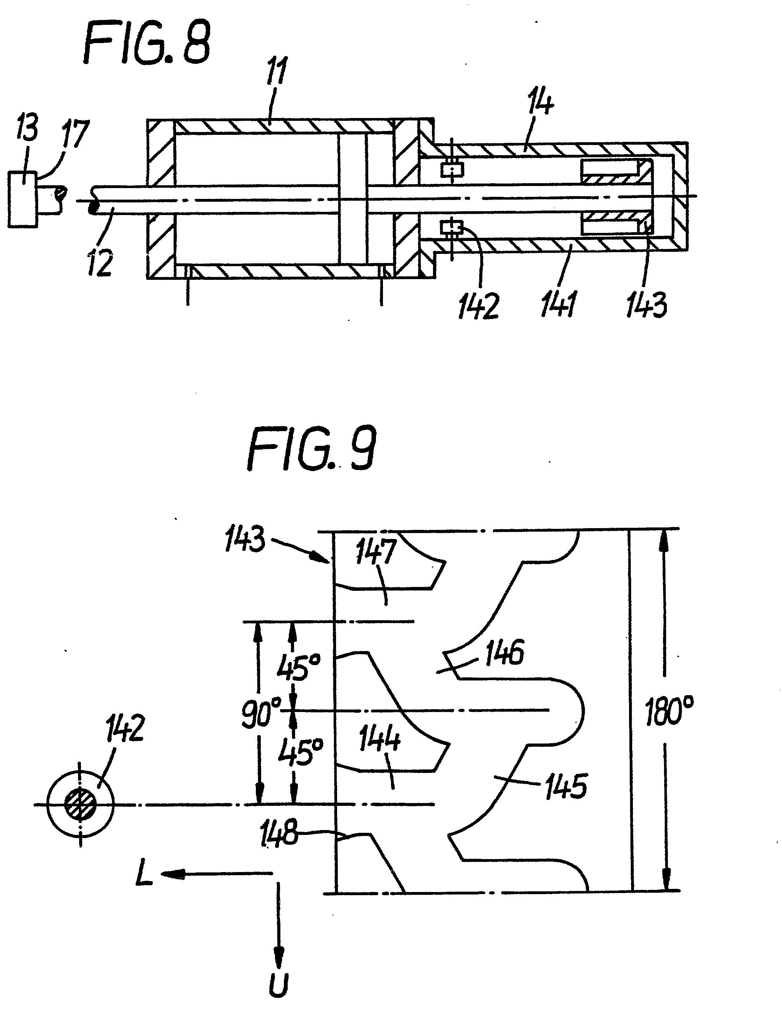

In den Fig. 8 und 9 ist ein bevorzugtes Ausführungsbeispiel eines Drehwerks 14 dargestellt. Das Drehwerk weist ein hohlzylindrisches Gehäuseteil 141 auf, an dessen Innenfläche zwei Kurvenrollen 142 einander gegenüber angeordnet sind. Die Kolbenstange 12 weist an ihrem dem hammerförmigen Kopf gegenüberliegendem Ende eine fest mit ihr verbundene Kurvenhülse 143 auf. Der Kurvenverlauf der Nutkurvenanordnung der Kurvenhülse 143 ist in Fig. 9 als Abwicklung über den halben Umfang dargestellt und wird im folgenden anhand der Funktion des Drehwerks beschrieben.

Wenn das obere Kopfteil 5 des Extrusionskopfes 1 von dem Hydraulikzylinder 9 gegen das feststehende Kopfteil 4 gefahren ist, wird die in Fig. 8 rechts dargestellte Kammer des Zylinders 11 mit Druck beaufschlagt, so daß sich der Kolben, die Kolbenstange 12 und der hammerförmige Kopf 13 im Leerhub nach links in Richtung auf die im Kopfteil 5 befindliche Ausnehmung 16 bewegen. Dabei ist das Kopfteil 13 genauso ausgerichtet wie die Öffnung 15 der Ausnehmung 16 (vgl. Fig. 2). Bei diesem Leerhub bewegt sich die Kurvenhülse 143 auf die beiden fest angeordneten Kurvenrollen 142 zu.

Der Einfachheit halber wird der Kurvenverlauf der Kurvenhülse 143 lediglich anhand einer einzigen der beiden Kurvenrollen 142 beschrieben. Die Kurvenhülse 143 gleitet in Längsrichtung L mit einem achsparallelen Kurvenstück 144 auf die Kurvenrolle 142 zu. Wenn im Verlaufe der weiteren Längsbewegung das schräg verlaufende Kurventeil 145 über die Kurvenrolle 142 gleitet, erhält die Kurvenhülse 143 - und mit ihr der hammerförmige Kopf 13 - bis zum Ende des Leerhubs eine Drehbewegung von 45°. Bei der umgekehrten Bewegungsrichtung, d.h. entgegen der Richtung L wird die Kurvenrolle 142 von dem zweiten schrägliegenden Kurvenstück 146 erfaßt, so daß die Kurvenhülse 143 und der hammerförmige Kopf 13 eine weitere Drehung um 45° in Umfangsrichtung U erfahren, wo ein weiteres achsparalleles Kurvenstück 147 die Kurvenrolle 142 erfaßt. Der hammerförmige Kopf 13 hat also innerhalb der Ausnehmung 16 des schwenkbaren Kopfteils 5, d.h. bei begrenzter Hublänge, insgesamt eine Drehung von 2 × 45° = 90° erfahren. Bei der weiteren Bewegung entgegen der Richtung L gelangt die Anlagefläche 17 des hammerförmigen Kopfs 13 gegen die Anlagefläche 18 des Kopfteils 5, so daß dieses beim weiteren Beaufschlagen der in Fig. 8 links dargestellten Kammer des Zylinders 11 an das feststehende Kopfteil 4 angepreßt bzw. mit diesem verspannt wird. Wenn die Kurvenhülse 143 die Kurvenrollen 142 über einen großen Teil des Hubes nicht erfaßt, bleibt die Kolbenstange infolge der vorhandenen Reibung in ihrer jeweiligen Drehlage bestehen. Damit das Aufgleiten der geraden Kurvenstücke 144 auf die Kurvenrolle 142 problemlos erfolgt, sind am Anfang dieses Kurvenstücks schräge Führungsflächen 148 angeordnet.

Die für das Drehwerk 14 beschriebene Ausführungsform kann entsprechend für die Drehwerke 60 verwendet werden.

Neben dem beschriebenen Ausführungsbeispiel können die Drehwerke 14 bzw. 60 auch als Schwenkmotor bzw. Drehzylinder ausgebildet sein, wobei eine Längsbewegung des hammerförmigen Kopfs 13 während des Drehens entfallen kann.

## Patentansprüche

1. Extrusionskopf mit mindestens einem um eine Achse schwenkbaren Kopfteil, einem feststehenden Kopfteil und - an jeder Kopfseite - einem Hydraulikzylinder zum Verspannen der Kopfteile zu einer betriebsfähigen Einheit, **dadurch gekennzeichnet,** daß jedem schwenkbaren Kopfteil (5, 105) - bei einem Extrusionskopf mit beweglichen Zwischenteilen (25, 26): jedem äußeren schwenkbaren Kopfteil (27, 28) - an jeder Seite je ein fest mit dem feststehenden Kopfteil (4; 24) verbundener Hydraulikzylinder (11; 51, 52) zugeordnet ist, dessen Kolbenstange (12; 53, 54; 112) in Richtung auf das ggf. äußere schwenkbare Kopfteil (5; 27, 28; 105), das an dem festehenden Kopfteil (3, 4; 24) bzw. an einem ggf. vorhandenen Zwischenteil (25, 26) anliegt, ausfahrbar ist, und daß zwischen dem freien Ende der Kolbenstange (12; 53, 54; 112) und dem ggf. äußeren beweglichen Kopfteil (5; 27, 28; 105) eine auf Zug beanspruchbare, lösbare Verbindung zwischen dem Kopfteil und den Kolbenstangen vorgesehen ist.

2. Extrusionskopf nach Anspruch 1, dadurch gekennzeichnet, daß die Kolbenstangen (12; 53, 54;

112) jeweils mindestens zwei gleichmäßig am Umfang verteilte radiale Vorsprünge (13; 55; 113) mit einer in Richtung auf den Hydraulikzylinder (11; 51, 52) weisenden Druckfläche (17; 117) und die ggf. äußeren schwenkbaren Kopfteile (5; 27, 28; 105) an jeder Seite einen der Form der Vorsprünge (13; 55; 113) entsprechenden Durchlaß (15; 56; 115) mit einer von dem jeweiligen Hydraulikzylinder abgewandten Anlagefläche (18; 118) aufweisen und daß die Kolbenstangen (12; 53, 54; 112) durch ein Drehwerk (14; 60) um den halben, durch die Anzahl der Vorsprünge gegebenen Teilungswinkel drehbar sind.

3. Extrusionskopf nach Anspruch 2, dadurch gekennzeichnet, daß der Durchlaß durch eine in das betreffende Kopfteil (5; 27, 28) führende, den Vorsprüngen (13; 55; 113) entsprechende Öffnung (15; 56) mit einer hinterschnittenen Ausnehmung (16) und die Anlagefläche (18) des Kopfteils (5; 27, 28) durch den Übergang von der Öffnung (15; 56) zur Ausnehmung (16) gebildet ist.

4. Extrusionskopf nach Anspruch 2, dadurch gekennzeichnet, daß der Durchlaß (115) und die Anlagefläche (118) durch zwei seitlich angeordnete Vorsprünge (101, 102) gebildet sind.

5. Extrusionskopf nach einem der Ansprüche 2 bis 4, dadurch gekennzeichnet, daß das Drehwerk (14; 60) eine Nutkurvenanordnung (143) mit Nutverzweigungen und Kurvenrollen (142) aufweist, wobei eine Drehung der Kolbenstange (12; 53, 54) bewirkende, schräg verlaufende Kurventeile (145, 146) jeweils in ein achsparallel mit der Kolbenstange (12; 53, 54) verlaufendes Kurvenstück (144, 147) münden.

6. Extrusionskopf nach einem der Ansprüche 2 bis 4, dadurch gekennzeichnet, daß das Drehwerk (14; 60) als Schwenkmotor ausgebildet ist.

**Revendications**

1. Tête d'extrusion comportant au moins une partie de tête pivotant autour d'un axe, une partie de tête fixe et – de part et d'autre de la tête un vérin hydraulique destiné à serrer les parties de tête pour obtenir une unité fonctionnelle, caractérisée en ce qu'à chaque partie de tête pivotante (5, 105) - pour une tête d'extrusion à parties intermédiaires (25, 26) mobiles: chaque partie de tête pivotante (27, 28) extérieure est associé, de part et d'autre, un vérin hydraulique (11, 51, 52) solidaire de la partie de tête (4; 24) dont la tige de piston (12; 53, 54; 112) ressort en direction de la partie de tête pivotante (5; 27, 28, 105) éventuellement extérieure qui s'applique contre la partie de tête fixe (3, 4; 24) ou contre une éventuelle partie intermédiaire (25, 26) et en ce qu'il est prévu entre l'extrémité libre de la tige de piston (12; 53, 54; 112) et la partie de tête mobile (5; 27, 28; 105) éventuellement extérieure, une liaison amovible sollicitée en traction, entre la partie de tête et les tiges de piston.

2. Tête d'extrusion selon la revendication 1, caractérisée en ce que les tiges de piston (12; 53, 54; 112) présentent chacune au moins deux saillies radiales (13; 55; 113) uniformément réparties sur le pourtour avec une surface de pression (17, 117) tournée vers le vérin hydraulique (11, 51, 52), et en ce que les parties de tête pivotantes (5; 27, 28, 105) éventuellement extérieures présentent de part et d'autre un passage (15; 56; 115) de forme correspondant à celle des saillies (13; 55, 113), avec une surface d'appui (18; 118) éloignée du vérin hydraulique correspondant, et en ce que les tiges de piston (12, 53, 54, 112) peuvent tourner, sous l'effet d'un mécanisme de rotation (14; 60), d'un angle correspondant à la moitié du pas angulaire donné par le nombre de saillies.

3. Tête d'extrusion selon la revendication 2, caractérisée en ce que le passage est formé par une ouverture (15; 56), correspondant aux saillies (13; 55; 113) et menant à la partie de tête (5, 27, 28) concernée, et présentant un évidement (16) détalonné, et la surface d'appui (18) de la partie de tête (5; 27, 28) est formée par la transition entre l'ouverture (15, 56) et l'évidement (16).

4. Tête d'extrusion selon la revendication 2, caractérisée en ce que le passage (115) et la surface d'appui (118) sont formés par deux saillies (101, 102) placées latéralement.

5. Tête d'extrusion selon l'une des revendications 2 à 4, caractérisée en ce que le mécanisme de rotation (14; 60) présente un dispositif à cames rainurées (143) comportant des rainures ramifiées et des galets a cames (142), des parties de cames (145, 146) obliques, entraînant une rotation de la tige de piston (12; 53, 54) débouchant dans une pièce de came (144, 147) d'axe parallèle à la tige de piston (12; 53, 54).

6. Tête d'extrusion selon l'une des revendications 2 à 4, caractérisée en ce que le mécanisme de rotation (14; 60) est un moteur oscillant.

**Claims**

1. An extrusion head having at least one head member pivotable around an axis, a fixed head member and at each side of the head a hydraulic cylinder for bracing the head members to form an operable unit, characterized in that associated on each side with each pivotable head member (5, 105), or with each outer pivotable head member (27, 28) in the case of an extrusion head having movable intermediate members (25, 26), is a hydraulic cylinder (11; 51, 52) which is rigidly connected to the fixed head member (4; 24) and whose piston rod (12; 53, 54; 112) can be extended in the direction of the possible outer pivotable head member (5; 27, 28; 105) bearing against the fixed head member (3, 4; 24) or any intermediate member (25, 26) provided, and disposed between the free end of the piston rod (12; 53, 54; 112) and any outer movable head member (5; 27, 28: 105) is a connection between the head member and the piston rods which can be subjected to tensile stressing and released.

2. An extrusion head according to claim 1, characterized in that each of the piston rods (12; 53, 54; 112) has at least two radial projections (13; 55; 113) uniformly distributed over the periphery and having a pressure surface (17; 117) pointing towards the hydraulic cylinder (11; 51, 52), and any outer pivotable head members (5; 27, 28; 105) have on each side a passage (15; 56, 115) matching the shape of the projections (13; 55; 113) and having a bearing surface (18; 118) remote from the particular hydraulic cylinder, and the piston rods (12: 53, 54: 112) can be rotated by a rotating mechanism (14; 60) by half the pitch angle determined by the number of projections.

3. An extrusion head according to claim 2, characterized in that the passage is formed by an opening (15; 56) extending into the particular head portion (5; 27, 28) and matching the projections (13; 55; 113) and having an undercut recess (16), the bearing surface (18) of the head member (5; 27, 28) being formed by the transition from the opening (15; 56) to the recess (16).

4. An extrusion head according to claim 2, characterized in that the passage (115) and the bearing surface (118) are formed by two laterally disposed projections (101, 102).

5. An extrusion head according to one of claims 2 to 4, characterized in that the rotating mechanism (14; 60) has a cam-with-groove arrangement (143) having groove branches and cam rollers (142), cam portions (145, 146) extending at an angle and causing a rotation of the piston rod (12; 53, 54) each merging into a cam portion (144, 147) extending axis-parallel with the piston rod (12; 53, 54).

6. An extrusion head according to one of claims 2 to 4, characterized in that the rotating mechanism (14; 60) is constructed in the form of an oscillating motor.

FIG.1

7

6

3

5

16    13

4    A

1

12

10

11

14

8

9

2

FIG.2

5

16

12

15

13

4

FIG.3

7

5

16    18

15    13    17

12

11

# FIG.4

# FIG.5

FIG.6

FIG.7

# FIG. 8

# FIG. 9